# EUROPÄISCHE PATENTSCHRIFT

(11) **EP 1 075 605 B1**
(45) Veröffentlichungstag und Bekanntmachung des Hinweises auf die Patenterteilung: **21.01.2004**
(21) Anmeldenummer: 99922093.2
(22) Anmeldetag: 12.04.1999
(51) Int. Cl.: F16C 9/02

(54) **GETEILTE LAGERANORDNUNG IN EINEM GEHÄUSE, INSBESONDERE KURBELWELLEN-GLEITLAGER FÜR HUBKOLBENMASCHINEN**
SPLIT BEARING ARRANGEMENT IN A MACHINE HOUSING, ESPECIALLY A CRANKSHAFT SLIDING BEARING FOR RECIPROCATING PISTON MACHINES
ENSEMBLE PALIER DIVISE, PLACE DANS UN BOITIER, NOTAMMENT PALIER LISSE DE VILEBREQUIN POUR MOTEURS A PISTON ALTERNATIF

(30) Priorität: 29.04.1998 DE 19819081
(43) Veröffentlichungstag der Anmeldung: 14.02.2001
(73) Patentinhaber: Bayerische Motoren Werke Aktiengesellschaft, 80788 München (DE)
(72) Erfinder: WIMMER, Rudolf, A-4431 Haidershofen (AT); MAYR, Karl, A-4441 Behamberg (AT); MALISCHEW, Franz, A-4400 Steyr (AT); KEBER, Andreas, A-4400 Steyr (AT); LUCHNER, Clemens, D-85598 Baldham (DE)
(86) Internationale Anmeldenummer: PCT/EP1999/002443
(87) Internationale Veröffentlichungsnummer: WO 1999/056028

(56) Entgegenhaltungen:
- EP-A- 0 882 901
- DE-A- 19 535 497
- DE-A- 19 645 691
- FR-A- 1 319 736
- FR-A- 2 327 440

## Beschreibung

Die Erfindung bezieht sich nach dem Oberbegriff des Patentanspruches 1 auf eine geteilte Lageranordnung in einem Gehäuse, insbesondere Kurbelwellen-Gleitlager für Hubkolbenmaschinen, wie diese aus der DE-A 195 35 497 bekannt ist.

Bei dieser bekannten Lageranordnung werden die am Lagerdeckel im Bereich seiner Spannfläche vorgesehenen Vorsprünge durch eine grobe mechanische Endbearbeitung dieser Spannfläche erzeugt. Bevorzugt wird hierbei eine durch lineares Fräsen der Teilungsfläche bzw. Spannfläche parallel zur Lagermittelachse erzeugte Oberflächenrauhigkeit, deren scharfkantige Spitzen sich beim Zusammenspannen des Gleitlagers in die korrespondierende Gegenspannfläche des Lagerstuhls eingraben.

Ein auf diese Weise mit Vorsprüngen in der Spannfläche hergestellter Lagerdeckel erreicht in keiner Weise einen mit einer durch Bruchtrennen erzeugten Spannfläche gegebenen Formschlusseingriff, so dass der Lagerdeckel gegen Querbelastungen zusätzlich zu sichern ist.

Der Erfindung liegt daher die Aufgabe zugrunde, eine Lageranordnung mit einer verbesserten Material-Verklammerung aufzuzeigen.

Diese Aufgabe ist mit den Merkmalen des Anspruchs 1 gelöst.

Mit der erfindungsgemäß gestalteten Material-Verklammerung kann in einer geteilten Lageranordnung der verspannbar angeordnete Lagerdeckel in vorteilhafter Weise hohe Querkräfte aufnehmen, wie dies beispielsweise bei einem V-Motor von besonderem Vorteil ist.

Vorteilhafte Ausgestaltungen der Erfindung sind in den Unteransprüchen angegeben.

Die Erfindung ist anhand eines bevorzugten, in der Zeichnung dargestellten Ausführungsbeispiels beschrieben. Es zeigt
- Figur 1: in perspektivischer Ansicht einen von einem angedeuteten Lagerstuhl entfernt gezeigten Lagerdeckel mit den erfindungsgemäßen Vorsprüngen, und
- Figur 2: einen Ausschnitt der Vorsprünge im Querschnitt.

Eine geteilte Lageranordnung 1 in einem Maschinen-Gehäuse 2 einer nicht näher dargestellten Hubkolbenmaschine umfasst insbesondere für ein Kurbelwellen-Gleitlager 3 einen Lagerstuhl 4 und einen Lagerdeckel 5 aus unterschiedlich harten Werkstoffen, wobei der gegen den Lagerstuhl 4 verspannbar angeordnete Lagerdeckel 5 über Vorsprünge 6 formschlüssig mit dem Lagerstuhl 4 gegen Querbelastungen gesichert zusammenwirkt.

Zur Erzielung einer hochbelastbaren Material-Verklammerung in der geteilten Lageranordnung 1 insbesondere eines Kurbelwellen-Gleitlagers 3 weist der aus einem Eisenwerkstoff gebildete Lagerdeckel 5 über seine Spannfläche 7 vorstehend ausgebildete schneidenartige Vorsprünge 6 auf, wobei ferner Nuten 8, 9 in den korrespondierenden Spannflächen 7, 10 von Lagerdeckel 5 und Lagerstuhl 4 vorgesehen sind, die der Aufnahme des bei einer Erstmontage des Lagerdeckels 5 mit Kraftaufwand in die Gegenspannflächen 10 des aus einem Leichtmetall gebildeten Lagerstuhls 4 eingedrückten Vorsprünge 6 beim Eindrücken verdrängten Werkstoffes des Lagerstuhles 4 dienen.

Die Lageranordnung 1 umfasst einen Lagerdeckel 5 aus einem Grauguss, wobei die Vorsprünge 6 einen Schneidenwinkel α ungefähr 50° - 110° aufweisen, ferner dass die Schneidenhöhe "H" über der Spannfläche 7 des Lagerdeckels 5 zwischen 0,25-1,5 mm beträgt, wobei mit Radien von R = 0,15 - 0,30 mm verrundete Nuten 8 im jeweiligen Radiusmaß R in die Spannfläche 7 eingetieft an die Schneidenflanken 6', 6" anschließen. Die benachbarten Nuten 8 dienen der Aufnahme des beim Eindrücken in den Lagerstuhl 4 verdrängten Werkstoffes. Die Vorsprünge 6 am Lagerdeckel 5 sind als geradlinige Schneiden im Abstand "A" zwischen 2-5 mm gewählt.

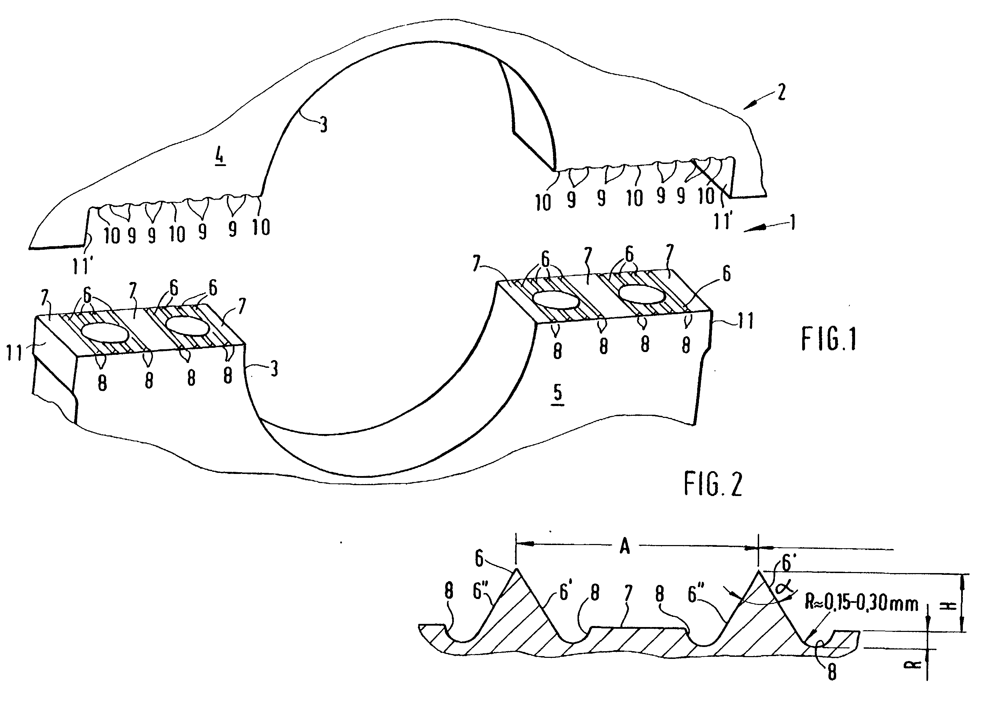

Für die aus Figur 1 am Lagerdeckel 5 in dessen Spannfläche 7 erkennbaren Vorsprünge 6 hat sich für einen Lager-Durchmesserbereich von 40 - 60 mm ein aus Figur 2 erkennbares Profil der Vorsprünge 6 bewährt, wobei der Schneidenwinkel α =60° und die Schneidenhöhe H = 0,75 mm gewählt ist und der Radius der jeweils verrundeten Nut 8 zu 0,25 - 0,3 mm. Weiter kann der Schneiden-Abstand der Vorsprünge 6 gleich oder ungleich gewählt sein.

Mit der erfindungsgemäßen Maßnahme sind in vorteilhafter Weise zur sicheren Material-Verklammerung bei der Erstmontage des Lagerdeckels 5 am Lagerstuhl 4 über die Vorsprünge 6 mit diesen korrespondierende Vertiefungen (nicht dargestellt) eingeprägt, die bei zukünftiger Montage oder Demontage der lagegenauen Fixierung des Lagerdeckels 5 am Lagerstuhl 4 dienen.

Zur Erzielung einer genauen Zuordnung des Lagerdeckels 5 zum Lagerstuhl 4 wird weiter vorgeschlagen, dass der Lagerdeckel 5 beim Eindrücken der Vorsprünge 6 in die Gegenspannfläche 10 des aus einer Alu-Legierung gebildeten Lagerstuhls 4 mittels Schiebepassungen, wie beispielsweise den Passungswangen 11 des Lagerdeckels 5 mit dem Lagerstuhl 4 relativ zum Lagerstuhl 4 geführt ist. Damit ist eine genaue, spielfreie Abbildung der mit den Vorsprüngen 6 korrespondierenden Vertiefungen im Lagerstuhl 4 gewährleistet.

Um die beim Eindrücken der Vorsprünge 6 in die Gegenspannfläche 10 des Lagerstuhls 4 gegebenen Werkstoffverdrängungen ohne nachteilige Auswirkung auf die übrige flächige Anlage der Spannfläche 7 mit der Gegenspannfläche 10 zu kompensieren, sind den Vorsprüngen 6 verrundete Nuten 8 benachbart zugeordnet, wobei zum vorteilhaften Fließen des verdrängten Werkstoffes die Nuten 8 unmittelbar in die Schneidenflanken 6' und 6" übergehen.

Wie aus Figur 1 erkennbar, können anstelle der Nuten 8 im Lagerdeckel 5 in der Gegenspannfläche 10 des Lagerstuhles 4 in Bereichen der einzudrückenden Vorsprünge des Lagerdeckels 5 flache verrundete Nuten 9 angeordnet sein. Diese Nuten 9 sind bezüglich ihrer Eintiefung von der Gegenspannfläche 10 aus in Abstimmung auf die jeweilige Schneidenhöhe H der Vorsprünge 6 gewählt, um für die geradlinig und/oder bogenförmig gestalteten Vorsprünge 6 eine ausreichende Vertiefung zur Material-Verklammerung zu erreichen. Im übrigen können auch beide Arten von Nuten 8, 9 kombiniert sein, um sicherzustellen, dass eine Werkstoffverdrängung nicht in die Bereiche der planen Spannfläche 7 und Gegenspannfläche 10 erfolgt.

Das vorzugsweise über die Passungswangen 11, aber auch über nicht dargestellte Passstifte, Passhüllen oder Schraubenzentrierbunde, mögliche geführte Eindrücken der Vorsprünge 6 kann zum einen in der Weise erfolgen, dass der Lagerdeckel 5 mit seinen Vorsprüngen 6 mittels der Lagerverschraubung in den Lagerstuhl eingedrückt ist. Weiter ist es möglich, bei der Erstmontage des Lagerdeckels 5 diesen mittels einer Presseinrichtung in den Lagerstuhl einzudrücken und gegebenenfalls bei teilweiser Vor-Eindrückung die Gesamt-Eindrückung mittels der Lagerverschraubung zu bewerkstelligen.

Die Vorsprünge 6 am Lagerdeckel können entweder spanabhebend oder mittels Erodieren gebildet sein.

Als weitere, nicht gezeigte Werkstoffvariante für den Lagerdeckel 5 kann dieser aus einem Sinterwerkstoff gestaltet sein mit Schrauben-Durchgangsbohrungen, wobei in Verbindung mit der Sinter-Herstellung zu den Durchgangsbohrungen konzentrisch angeordnete, kreisbogenförmige Vorsprünge ausgebildet sind, die über den Spannflächen 7 des Lagerdeckels 5 vorstehen.

Der erfindungsgemäße Formschluss zwischen Lagerdeckel 5 und Lagerstuhl 4 aus unterschiedlich harten Werkstoffen findet vorzugsweise Verwendung bei einem Maschinen-Gehäuse 2 für einen V-Motor bzw. Brennkraftmaschine, insbesondere mit einem V-Winkel von 90° mit bekanntlich hohen Querkräften aus dem Triebwerk auf den Lagerdeckel 5.

## Patentansprüche

1. Geteilte Lageranordnung in einem Gehäuse, insbesondere Kurbelwellen-Gleitlager für Hubkolbenmaschinen,
- umfassend einen Lagerstuhl (4) und einen Lagerdeckel (5) aus unterschiedlich harten Werkstoffen, wobei
- der gegen den Lagerstuhl (4) verspannbar angeordnete aus einem Eisenwerkstoff gebildete Lagerdeckel (5) über seine Spannfläche (7) vorstehend ausgebildete scharfkantig spitze Vorsprünge (6) aufweist, die bei einer Erstmontage des Lagerdeckels (5) mit Kraftaufwand in die Gegenspannfläche (10) des aus einem Leichtmetall gebildeten Lagerstuhles (4) eingedrückt sind, und wobei
- ferner Nuten (8) in der Spannfläche (7) des Lagerdeckels (5) vorgesehen sind,
**dadurch gekennzeichnet,**
- **dass** der Lagerdeckel (5) mit ein Schneiden- oder Pyramidenprofil aufweisenden Vorsprüngen (6) ausgebildet ist, wobei
- die Vorsprünge (6) einen Schneidenwinkel α ≈ 50° - 110° aufweisen, ferner
- **dass** die Schneidenhöhe "H" über der Spannfläche (7) des Lagerdeckels (5) zwischen 0,25 - 1,5 mm beträgt, wobei
- mit Radien von R = 0,15 - 0,30 mm verrundete Nuten (8) im jeweiligen Radiusmass "R" in die Spannfläche (7) eingetieft an den Schneidenflanken (6', 6") anschließen, und
- **dass** die Nuten (8) der Aufnahme des beim Eindrücken der Vorsprünge (6) in den Lagerstuhl (4) verdrängten Werkstoffes des Lagerstuhls (4) dienen.

2. Lageranordnung nach Anspruch 1, **dadurch gekennzeichnet, dass** die Vorsprünge (6) am Lagerdeckel (5) als geradlinige Schneiden im Abstand "A" zwischen 2 - 5 mm gewählt sind.

3. Lageranordnung nach Anspruch 1, **dadurch gekennzeichnet, dass** die Vorsprünge (6) am Lagerdeckel (5) als bogenförmige Schneiden gestaltet sind.

4. Lageranordnung nach einem der Ansprüche 1 bis 3, **dadurch gekennzeichnet**, das der aus einem Grauguss gebildete Lagerdeckel (5) beim Eindrücken der Vorsprünge (6) in die Gegenspannflächen (10) des aus einer Alu-Legierung gebildeten Lagerstuhles (4) mittels Schiebepassungen (11) relativ zum Lagerstuhl (4) geführt ist.

5. Lageranordnung nach den Ansprüchen 1 bis 4, **dadurch gekennzeichnet, dass** der Lagerdeckel (5) mit seinen Vorsprüngen (6) mittels einer Lagerverschraubung und/oder einer Presseinrichtung in den Lagerstuhl (4) eingedrückt ist.

6. Lageranordnung nach Anspruch 1, **dadurch gekennzeichnet, dass** in den Gegenspannflächen (10) des Lagerstuhls (4) in Bereichen der einzudrückenden Vorsprünge (6) des Lagerdeckels (5) flache, verrundete Nuten (9) angeordnet sind.

7. Lageranordnung nach Anspruch 1, **dadurch gekennzeichnet, dass** der aus einem Sinterwerkstoff gebildete und mit Schrauben-Durchgangsbohrungen versehene Lagerdeckel (5) zu den Durchgangsbohrungen konzentrisch angeordnete, kreisbogenförmige Vorsprünge aufweist.

8. Lageranordnung nach einem oder mehreren der Ansprüche 1 bis 6, **dadurch gekennzeichnet, dass** die Vorsprünge (6) am Lagerdeckel (5) spanabhebend oder mittels Erodieren gebildet sind.

9. Lageranordnung nach einem oder mehreren der Ansprüche 1 bis 8, **gekennzeichnet durch** die Verwendung in einem Maschinen-Gehäuse (2) für einen V-Motor.

## Claims

1. A divided bearing arrangement in a casing, especially a crankshaft sliding bearing for reciprocating engines,
- comprising a bearing block (4) and a bearing cover (5) made of materials differing in hardness, wherein
- the bearing cover (5), made of an iron material and clampable against the bearing block (4), has sharp-edged pointed projections (6) preferably formed over its clamping surface (7) and forcibly pressed, when the bearing cover (5) is first fitted, into the mating clamping surface (10) of the bearing block (4), which is made of light metal, wherein
- grooves (8) are formed in the clamping surface (7) of the bearing cover (5),
**characterised in that**
- the bearing cover (5) is formed with projections (6) which are edged or pyramidal in cross-section, wherein
- the projections (6) have an edge angle α ≈ 50° - 1100, and
- the height (H) of the edges above the clamping surface (7) of the bearing cover (5) is between 0.25 - 1.5 mm and
- rounded grooves (8) having radii R = 0.15 - 0.30 mm are recessed in the respective radius dimension (R) into the clamping surface (7) and adjoin the edge flanks (6', 6") and
- the grooves (8) receive material displaced from the bearing block (4) when the projections (6) are pressed into the bearing block (4).

2. A bearing arrangement according to claim 1, **characterised in that** the projections (6) in the bearing cover (5) are straight edges at intervals (A) between 2 - 5 mm.

3. A bearing arrangement according to claim 1, **characterised in that** the projections (6) on the bearing cover (5) are arcuate edges.

4. A bearing arrangement according to any of claims 1 to 3, **characterised in that** when the projections (6) are pressed into the mating clamping surfaces (10) of the bearing block (4), made of an aluminium alloy, the bearing cover (5), made of cast iron, is guided by sliding fits (11) relative to the bearing block (4).

5. A bearing arrangement according to claims 1 to 4, **characterised in that** the projections (6) on the bearing cover (5) are pressed into the bearing block (4) by screwing the bearing and/or by a pressing device.

6. A bearing arrangement according to claim 1, **characterised in that** shallow rounded grooves (9) are formed in the mating clamping surfaces (10) of the bearing block (4) at the places where the projections (6) on the bearing cover (5) are pressed in.

7. A bearing arrangement according to claim 1, **characterised in that** the bearing cover (5), made of sintered material and formed with screw-holes has arcuate projections concentric with the holes.

8. A bearing arrangement according to one or more of claims 1 to 6,
**characterised in that** the projections (6) on the bearing cover (5) are made by machining or by erosion.

9. A bearing arrangement according to one or more of claims 1 to 8,
**characterised by** use in an engine casing (2) for a V-engine.

## Revendications

1. Ensemble palier divisé dans un carter, notamment un palier lisse de vilebrequin d'un moteur à piston alternatif,
- comprenant une selle de palier (4) et un couvercle de palier (5) en matériau d'une dureté différente,
- le couvercle de palier (5) en matériau ferreux pouvant être serré contre la selle de palier (4) présentant des saillies (6) en forme de dents à arêtes vives dépassant sa surface de serrage (7), qui lors d'un premier montage du couvercle de palier (5) sont enfoncées par force dans la surface de serrage complémentaire (10) de la selle de palier (4) en métal léger, et
- des rainures (8) étant par ailleurs prévues dans la surface de serrage (7) du couvercle de palier (5),
**caractérisé en ce que**
- le couvercle de palier (5) est formé avec des saillies (6) présentant un profil de dent ou de pyramide,
- les saillies (6) présentent un angle de dent α ≈ 50° - 110°,
- la hauteur de dent « H » au-dessus de la surface de serrage (7) du couvercle de palier (5) est comprise entre 0,25 et 1,5 mm,
- des rainures (8) arrondies de rayons de R =0,15 - 0,30 mm prolongent les flancs de dent 6', 6" selon la valeur de rayon « R » respective, en étant creusées dans la surface de serrage (7), et
- les rainures (8) servent à recevoir le matériau de la selle de palier (4) déplacé lors de l'enfoncement des saillies (6) dans la selle de palier (4) .

2. Ensemble palier selon la revendication 1,
**caractérisé en ce que**
les saillies (6) au niveau du couvercle de palier (5) sont des dents rectilignes d'une distance « A » comprise entre 2 et 5 mm.

3. Ensemble palier selon la revendication 1,
**caractérisé en ce que**
les saillies (6) au niveau du couvercle de palier (5) sont conçues comme des dents en forme d'arc.

4. Ensemble palier selon l'une des revendications 1 à 3,
**caractérisé en ce que**
le couvercle de palier (5) en fonte grise, lors de l'enfoncement des saillies (6) dans les surfaces de serrage complémentaires (10) de la selle de palier (4) en alliage d'aluminium, est guidé vers la selle de palier (4) à l'aide d'ajustements à glissière (11).

5. Ensemble palier selon les revendications 1 à 4,
**caractérisé en ce que**
le couvercle de palier (5) est enfoncé par ses saillies (6) dans la selle de palier (4) à l'aide d'un vissage de palier et/ou d'un dispositif de presse.

6. Ensemble palier selon la revendication 1,
**caractérisé en ce que**
des rainures arrondies plates (9) sont disposées dans les surfaces de serrage complémentaires (10) de la selle de palier (4) dans des zones des saillies (6) à enfoncer du couvercle de palier (5).

7. Ensemble palier selon la revendication 1,
**caractérisé en ce que**
le couvercle de palier (5) en matériau fritté et muni de perçages traversants filetés présente des saillies en forme d'arc de cercle disposées de manière concentrique par rapport aux perçages traversants.

8. Ensemble palier selon l'une ou plusieurs des revendications 1 à 6,
**caractérisé en ce que**
les saillies (6) sur le couvercle de palier (5) sont obtenues soit par enlèvement de matière soit par érosion.

9. Ensemble palier selon l'une ou plusieurs des revendications 1 à 8,
**caractérisé par**
l'utilisation dans un carter de machine (2) pour un moteur en V.
